# EUROPÄISCHE PATENTSCHRIFT

(11) **EP 2 000 872 B1**
(45) Veröffentlichungstag und Bekanntmachung des Hinweises auf die Patenterteilung: **12.03.2014**
(21) Anmeldenummer: 08157459.2
(22) Anmeldetag: 03.06.2008
(51) Int. Cl.: G05B 19/423, B25J 9/16

(54) **Industrieroboter und Verfahren zum Programmieren eines Industrieroboters**
Industrial robot and method for programming an industrial robot
Robot industriel et procédé de programmation d'un robot industriel

(30) Priorität: 06.06.2007 DE 102007026299
(43) Veröffentlichungstag der Anmeldung: 10.12.2008
(73) Patentinhaber: KUKA Laboratories GmbH, 86165 Augsburg (DE)
(72) Erfinder: Heiligensetzer, Peter, 86152, Augsburg (DE); Buchstab, Alois, 86391, Stadtbergen (DE); Klüger, Peter, 86391, Stadtbergen (DE)
(74) Vertreter: Patentanwälte Funk & Böss GbR

(56) Entgegenhaltungen:
- EP-A1- 1 724 072
- WO-A1-01/61618
- WO-A2-2006/093652
- US-A1- 2004 078 114
- US-B1- 6 242 879

## Beschreibung

Die Erfindung betrifft Verfahren zum Programmieren eines Industrieroboters und Industrieroboter.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind.

Unter Verfahren zum Programmieren des Roboters (Programmierverfahren), versteht man das planmäßige Vorgehen zur Erzeugung von Anwenderprogrammen.

Ein allgemein bekanntes Programmierverfahren ist die sogenannte Teach-In-Programmierung, bei der eine Bewegungsinformation für den Roboter durch Anfahren gewünschter Raumpunkte mit Hilfe einer geeigneten Vorrichtung, beispielsweise eines Programmierhandgerätes oder eines Bedienfeldes, und Übernahme dieser Raumpunkte in die Robotersteuerung erstellt wird.

Eine weitere Art der Programmierung ist das sogenannte Play-Back Verfahren, bei dem die Programmierung eines Arbeitsvorgangs durch manuelles Führen des Roboters entlang einer gewünschten Raumkurve erfolgt. Dabei werden die Lage-Ist Werte, d.h. die Achsstellungen oder die TCP-Position (Tool Center Point Position) des Roboters in einem definierten Zeit-oder Wegraster in das Anwenderprogramm übernommen.

Wird jedoch der Roboter programmiert, indem dieser z.B. in der Nähe eines Werkstücks oder an der Oberfläche des Werkstücks geführt wird, dann kann der Roboter während des Programmierens das Werkstück beschädigen, wenn er beispielsweise das Werkstück berührt und auf dieses eine relativ große Kraft ausübt.

Die WO 92/03769 offenbart ein Verfahren zum Programmieren eines Roboters, im Rahmen dessen eine Kraft und ein Drehmoment, die auf einen Endeffektor des Roboters wirken, gemessen werden. Der Roboter bewegt den Endeffektor in Richtung der wirkenden Kraft bzw. in Richtung des wirkenden Drehmoments mit einer Geschwindigkeit, die von der Größe der Kraft bzw. des Drehmoments abhängt.

Die WO 01/61618 A1 offenbart ein Verfahren zum Programmieren eines Roboters, bei dem der Roboter manuell bewegt wird. Während des manuellen Bewegens wird eine räumliche Zuordnung des Roboterarms relativ zu einem Werkstück mittels eines Sensors ermittelt. Mittels der ermittelten räumlichen Zuordnung wird eine Abweichung von einer vorgegebenen räumlichen Zuordnung bestimmt und der Roboter derart angesteuert, sodass er die vorgegebene räumliche Zuordnung einhält. Die vorgegebene räumliche Zuordnung ist z.B. ein vorgegebener Abstand zwischen dem Roboterarm und dem Werkstück

Die Aufgabe der Erfindung ist es, ein Verfahren zum Programmieren eines Roboters anzugeben, bei dem während des Programmierens der Roboter zumindest in der Nähe eines Objekts bewegt wird, wobei eine Gefahr einer Beschädigung des Objekts durch den Roboter während der Programmierung zumindest verringert wird.

Eine weitere Aufgabe der Erfindung ist es, einen entsprechenden Roboter anzugeben.

Die Aufgabe der Erfindung wird gelöst durch ein Verfahren zum Programmieren eines Industrieroboters, aufweisend folgende Verfahrensschritte:
- manuelles Bewegen eines Industrieroboters entlang einer Raumkurve, die entlang und/oder in der Nähe einer Oberfläche eines Objekts verläuft,
- Messen einer aufgrund einer Berührung mit dem Objekt auf den Industrieroboter wirkenden Kraft und/oder eines aufgrund der Berührung mit dem Objekt auf den Industrieroboter wirkenden Drehmomentes während der manuellen Bewegung des Industrieroboters entlang der Raumkurve,
- automatisches Korrigieren der Bewegung des Industrieroboters während seines manuellen Bewegens entlang der Raumkurve, sodass die aufgrund der Berührung des Industrieroboters mit dem Objekt auf den Industrieroboter wirkende Kraft höchstens gleich einer vorbestimmten Maximalkraft und/oder das aufgrund der Berührung des Industrieroboters mit dem Objekt auf den Industrieroboter wirkende Drehmoment höchstens gleich eines vorbestimmten Maximaldrehmomentes ist, und
- Speichern von Lage-Ist-Werten des Industrieroboters während seines Bewegens entlang der Raumkurve, wobei vor dem manuellen Bewegen des Industrieroboters entlang der Raumkurve der Industrieroboters automatisch in Richtung des Objekts bewegt wird, bis der Industrieroboter das Objekt berührt und auf den Industrieroboter die vorbestimmte Maximalkraft und/oder das vorbestimmte Maximaldrehmoment wirkt.

Die Aufgabe wird auch gelöst durch ein Verfahren zum Programmieren eines Industrieroboters, aufweisend folgende Verfahrensschritte:
- manuelles Bewegen eines Industrieroboters entlang einer Raumkurve, die entlang einer Oberfläche eines Objekts verläuft,
- Ermitteln eines Abstand zwischen der Oberfläche des Objekts und dem Industrieroboter während der manuellen Bewegung des Industrieroboters entlang der Raumkurve,
- automatisches Korrigieren der Bewegung des Industrieroboters während seines manuellen Bewegens entlang der Raumkurve, sodass der Abstand zwischen dem Industrieroboter und der Oberfläche des Objekts stets gleich einem Mindestabstand ist, und
- Speichern von Lage-Ist-Werten des Industrieroboters während seines Bewegens entlang der Raumkurve, wobei vor dem manuellen Bewegen des Industrieroboters entlang der Raumkurve der Industrieroboter automatisch in Richtung des Objekts bewegt wird, bis der Abstand zwischen dem Industrieroboter und der Oberfläche des Objekts gleich dem Mindestabstand ist.

Die weitere Aufgabe der Erfindung wird gelöst durch einen Industrieroboter, aufweisend eine Mehrzahl von Antrieben, eine Mehrzahl von von den Antrieben bewegbaren Achsen, eine Vorrichtung zum Ermitteln einer Kraft und/oder eines Drehmoments, die während eines manuellen Bewegens des Industrieroboters entlang einer Raumkurve, die entlang und/oder in der Nähe einer Oberfläche eines Objekts verläuft, eine eine aufgrund einer Berührung mit dem Objekt auf den Industrieroboter wirkende Kraft und/oder eines aufgrund der Berührung mit dem Objekt auf den Industrieroboter wirkendes Drehmoment ermittelt, und eine zum Steuern der Antriebe vorgesehene Steuervorrichtung, die automatisch die Antriebe derart ansteuert, um die Bewegung des Industrieroboters während seines manuellen Bewegens entlang der Raumkurve derart zu korrigieren, sodass die aufgrund der Berührung des Industrieroboters mit dem Objekt auf den Industrieroboter wirkende Kraft höchstens gleich einer vorbestimmten Maximalkraft und/oder das aufgrund der Berührung des Industrieroboters mit dem Objekt auf den Industrieroboter wirkende Drehmoment höchstens gleich eines vorbestimmten Maximaldrehmomentes ist, wobei die Steuervorrichtung automatisch die Antriebe ansteuert, sodass sich der Industrieroboter in Richtung des Objekts bewegt, bis der Industrieroboter das Objekt berührt und auf den Industrieroboter die vorbestimmte Maximalkraft und/oder das vorbestimmte Maximaldrehmoment wirkt.

Die weitere Aufgabe der Erfindung wird auch gelöst durch einen Industrieroboter, aufweisend eine Mehrzahl von Antrieben, eine Mehrzahl von von den Antrieben bewegbaren Achsen, eine Abstandsmessvorrichtung zum Messen eines Abstands zwischen dem Industrieroboter und der Oberfläche eines Objekts, und eine zum Steuern der Antriebe vorgesehene Steuervorrichtung, die automatisch die Antriebe derart ansteuert, um eine Bewegung des Industrieroboters während eines manuellen Bewegens des Industrieroboters entlang einer Raumkurve, die entlang der Oberfläche des Objekts verläuft, derart zu korrigieren, sodass der Abstand zwischen dem Industrieroboter und der Oberfläche des Objekts stets gleich einem vorgegebenen Mindestabstand ist, wobei die Steuervorrichtung automatisch die Antriebe ansteuert, sodass sich der Industrieroboter in Richtung des Objekts bewegt, bis der Abstand zwischen dem Industrieroboter und der Oberfläche des Objekts gleich dem Mindestabstand ist.

Die Steuervorrichtung kann die Lage-Ist-Werte der erfindungsgemäßen Industrieroboter während ihrer Bewegungen entlang der Raumkurve durch Betätigen eines Eingabemittels der Industrieroboter speichern oder die Lage-Ist-Werte z.B. in einem definierten Zeit- oder Wegraster in das Anwenderprogramm übernommen.

Um die erfindungsgemäßen Industrieroboter zu programmieren, werden diese entlang der Raumkurve bewegt. Während ihrer Bewegungen werden mehrere Lage-Ist-Werte der Industrieroboter gespeichert. Aus den gespeicherten Lage-Ist-Werten kann in allgemein bekannter Weise ein Rechenprogramm erstellt werden, mittels dessen die Steuervorrichtungen die Antriebe der Industrieroboter derart ansteuern können, dass die Industrieroboter sich nach der Programmierung automatisch entlang der Raumkurve bewegen. Dieses Rechenprogramm wird auch als Anwenderprogramm bezeichnet.

Unter Bewegen des Industrieroboters wird in diesem Zusammenhang die Bewegung eines bestimmtes Punktes, z.B. des Tool-Center Points (TCP) des Industrieroboters oder eine Bewegung eines bestimmten Teils des Industrieroboters, z.B. dessen Flansch oder ein am Industrieroboter befestigter Endeffektor verstanden.

Die erfindungsgemäßen Verfahren sind dafür vorgesehen, dass der Industrieroboter für seine Programmierung beispielsweise entlang einer Kontur eines Werkstückes, allgemein des Objekts, bewegt wird. Während dieser Bewegung kann der Industrieroboter das Objekt beschädigen, wenn der Industrieroboter ein zu großes Drehmoment oder eine zu große Kraft auf das Objekt ausübt. Ähnliches gilt nach der Programmierung, wenn der Industrieroboter im Automatikbetrieb betrieben wird und weitere Werkstücke bearbeitet.

Erfindungsgemäß ist demnach vorgesehen, die auf den Industrieroboter wirkende Kraft bzw. das auf den Industrieroboter wirkende Drehmoment während der manuellen Bewegung des Industrieroboters zu überwachen und die manuelle Bewegung beim Erreichen der vorgegebenen Maximalkraft bzw. des Maximaldrehmoments zu korrigieren. Dies kann z.B. dadurch realisiert werden, dass sich der Industrieroboter nur noch in eingeschränkte Richtungen und/oder Orientierungen manuel bewegen lässt, in denen die Maximalkraft bzw. das Maximaldrehmoment noch nicht erreicht wurde.

Die Kraft bzw. das Drehmoment kann mit der Vorrichtung zum Ermitteln einer Kraft und/oder eines Drehmoments gemessen werden. Eine geeignete Vorrichtung ist z.B. ein Kraft-Momenten Sensor. Dieser ist z.B. zwischen dem Flansch und einem Endeffektor des Industrieroboters befestigt. Die Vorrichtung zum Ermitteln einer Kraft und/oder eines Drehmoments kann beispielsweise derart ausgeführt sein, dass sie Kräfte und Momente in sechs Freiheitsgraden misst.

Das erfindungsgemäße Verfahren bzw. der erfindungsgemäße Industrieroboter können auch derart ausgeführt sein, dass die Bewegung des Industrieroboters während seines manuellen Bewegens entlang der Raumkurve automatisch derart korrigiert wird, dass die aufgrund der Berührung des Industrieroboters mit dem Objekt auf den Industrieroboter wirkende Kraft stets gleich der vorbestimmten Maximalkraft und/oder das aufgrund der Berührung des Industrieroboters mit dem Objekt auf den Industrieroboter wirkende Drehmoment stets gleich dem vorbestimmten Maximaldrehmoment ist. Mittels dieser Variante ist es z.B. möglich, dass während des manuellen Bewegens des Industrieroboters entlang der Oberfläche des Objekts dieser stets dieselbe Kraft bzw. stets dasselbe Drehmoment auf das Objekt ausübt, wodurch es z. B. in relativ einfacher Weise möglich ist, der Kontur der Oberfläche des Objekts zu folgen, ohne dieses zu beschädigen

Nach einer Ausführungsform des erfindungsgemäßen Verfahrens bzw. des erfindungsgemäßen Industrieroboters zeigt die Maximalkraft und/oder das Maximaldrehmoment in eine vorbestimmte Richtung. Die vorbestimmte Richtung wird z.B. in einem Werkzeugkoordinatensystem, in einem Weltkoordinatensystem oder einem Roboterkoordinatensystem des erfindungsgemäßen Industrieroboters beschrieben. Gemäß dieser Ausführungsform kann die gewünschte Maximalkraft bzw. das gewünschte Maximaldrehmoment in eine Vorzugsrichtung konstant gehalten werden oder es wird erreicht, dass die auf den Industrieroboter wirkende Kraft bzw. das auf den Industrieroboter wirkende Drehmoment, die der Kraft bzw. dem Drehmoment entsprechen, die auf das Objekt wirken, unterhalb der vorgegebenen Maximalwerte bleiben. Die Verwendung des Weltkoordinatensystems bietet sich z.B. an, wenn der Industrieroboter während seiner manuellen Bewegung beispielsweise Kontakt zum Objekt in Richtung einer der Koordinaten, z.B. senkrecht zum Boden, halten soll. Die Verwendung des Werkzeugkoordinatensystem ist beispielsweise vorteilhaft, wenn der Industrieroboter um das Objekt herumfahren und während der Umorientierung Kontakt zum Objekt halten soll. Die vorbestimmte Richtung kann aber auch von der Position und/oder Pose des erfindungsgemäßen Industrieroboters abhängen. Im Rahmen dieser Variante ist es dann möglich, den erfindungsgemäßen Industrieroboters nur in Richtungen ungleich der vorgegebenen Richtung manuell zu bewegen. Die Bewegung in Richtung der vorbestimmten Richtung wird dann vom erfindungsgemäßen Industrieroboter automatisch ausgeführt.

Erfindungsgemäß wird vor dem manuellen Bewegen des Industrieroboters entlang der Raumkurve der erfindungsgemäße Industrieroboter in Richtung des Objekts automatisch bewegt, bis der erfindungsgemäße Industrieroboter das Objekt berührt und auf den erfindungsgemäßen Industrieroboter die vorbestimmte Kraft und/oder das vorbestimmte Drehmoment wirkt. Dies erlaubt es z.B. dem erfindungsgemäßen Industrieroboter automatisch die Oberfläche des Objekts zu finden und ermöglicht eine Reduzierung einer Gefahr, eine zu hohe Kraft bzw. ein zu großes Drehmoment auf das Objekt auszuüben. Beispielsweise bewegt sich der erfindungsgemäße Industrieroboter automatisch in Richtung einer der Koordinatenachsen, bis er die Maximalkraft und/oder das Maximaldrehmoment misst. Anschließend stoppt der erfindungsgemäße Industrieroboter, damit die manuelle Bewegung erfolgen kann. Während der manuellen Bewegung kann dann der erfindungsgemäße Industrieroboter derart geregelt werden, dass die Kraft in der Richtung, in der sich der erfindungsgemäße Industrieroboter automatisch auf das Objekt bewegte, konstant bleibt. Dies kann beispielsweise dafür verwendet werden, mit dem erfindungsgemäßen Industrieroboter die Kontur des Objekts manuell abzufahren, wobei der erfindungsgemäße Industrieroboter aktiv Kontakt zum Objekt hält.

Alternativ wird der Abstand zwischen dem Industrieroboter und der Oberfläche des Objekts gemessen. Der Abstand wird z.B. mittels einer am Industrieroboter angeordneten Abstandsmessvorrichtung gemessen. Die Abstandsmessvorrichtung ist z.B. am Flansch des Industrieroboters befestigt und wird mit dem Flansch mitbewegt. Geeignete Abstandsmessvorrichtungen sind z.B. Kameras oder einer Kombination aus einer Laser und einem Bildsensor. Geeignete Abstandsmessvorrichtungen können beispielsweise auf dem sogenannten und dem Fachmann bekannten Lasertriangulationsverfahren beruhen. Dabei wird z.B. mittels einer Laserdiode ein Punkt auf der Oberfläche des Objekts markiert. Mittels eines Fotoaufnehmers, der insbesondere mit der Laserdiode in der Abstandsmessvorrichtung integriert ist, wird der Winkel, unter dem der von der Laserdiode erzeugte Punkt auf der Oberfläche des Objekts zur Abstandsmessvorrichtung erscheint, gemessen. Aus dem gemessenen Winkel kann der Abstand zwischen der Abstandsmessvorrichtung und der Oberfläche des Objekts ermittelt werden. Die Abstandsmessvorrichtung muss aber nicht notwendigerweise am Industrieroboter angeordnet oder mit diesem mitbewegt werden. Ein Vorteil dieser Ausführungsform ist es, dass der Industrieroboter manuell an der Kontur des Objekts entlang geführt werden kann, ohne dass der Industrieroboter das Objekt berührt.

Bei dem Abstand zwischen dem Industrieroboter und der Oberfläche des Objekts kann es sich beispielsweise um einen Abstand zwischen dem Flansch des Industrieroboters, einem mit dem Industrieroboter bewegten Werkzeug und/oder um die am Industrieroboter angeordnete Abstandsmessvorrichtung und der Oberfläche des Objekts handeln.

Erfindungsgemäß wird vor dem manuellen Bewegen des Industrieroboters entlang der Raumkurve der Industrieroboter in Richtung des Objekts solange automatisch bewegt, bis der Abstand zwischen dem Industrieroboter und der Oberfläche des Objekts gleich dem Mindestabstand ist. Dies erlaubt es z.B. dem erfindungsgemäßen Industrieroboter automatisch die Oberfläche des Objekts zu finden. Beispielsweise bewegt sich der erfindungsgemäße Industrieroboter automatisch in Richtung einer der Koordinatenachsen, bis er den Minimalabstand zur Oberfläche des Objekts erreicht hat. Anschließend stoppt der erfindungsgemäße Industrieroboter, damit die manuelle Bewegung erfolgen kann.

Die manuelle Bewegung des erfindungsgemäßen Industrieroboters kann z.B. durch manuelles Führen des Industrieroboters und/oder mittels eines manuell bedienbaren Eingabegerätes erfolgen. Wird der erfindungsgemäße Industrieroboter manuell geführt, so kann dieser einen Handgriff aufweisen, wobei die Vorrichtung zum Ermitteln der Kraft und/oder des Drehmoments zwischen dem Flansch des erfindungsgemäßen Industrieroboters und dem Handgriff angeordnet sein kann. Am Handgriff kann auch ein Eingabemittel, z.B. eine Taste angeordnet sein, aufgrund dessen Betätigung ein manuelles Führen des erfindungsgemäßen Industrieroboters ermöglicht wird oder aufgrund dessen Betätigung die Ist-Lage-Werte des erfindungsgemäßen Industrieroboters gespeichert werden. Als Eingabegerät kann z.B. ein Programmierhandgerät oder ein Joystick verwendet werden.

Nach einer Ausführungsform des erfindungsgemäßen Verfahrens bzw. des erfindungsgemäßen Industrieroboters wird die Geschwindigkeit, mit der sich der Industrieroboter manuell bewegen lässt, automatisch auf eine vorbestimmte Maximalgeschwindigkeit beschränkt. Dies kann die Sicherheit der manuellen Bedienung des erfindungsgemäßen Industrieroboters erhöhen.

Ausführungsbeispiele der Erfindung sind exemplarisch in den beigefügten schematischen Zeichnungen dargestellt. Es zeigen:
- Fig. 1: einen Roboter,
- Fig. 2: ein das Programmieren des Roboters der Fig. 1 veranschaulichendes Flussdiagramm,
- Fig. 3: einen weiteren Roboter,
- Fig. 4: eine Abstandsmessvorrichtung des Roboters der Fig. 3 und
- Fig. 5: ein das Programmieren des Roboters der Fig. 3 veranschaulichendes Flussdiagramm.

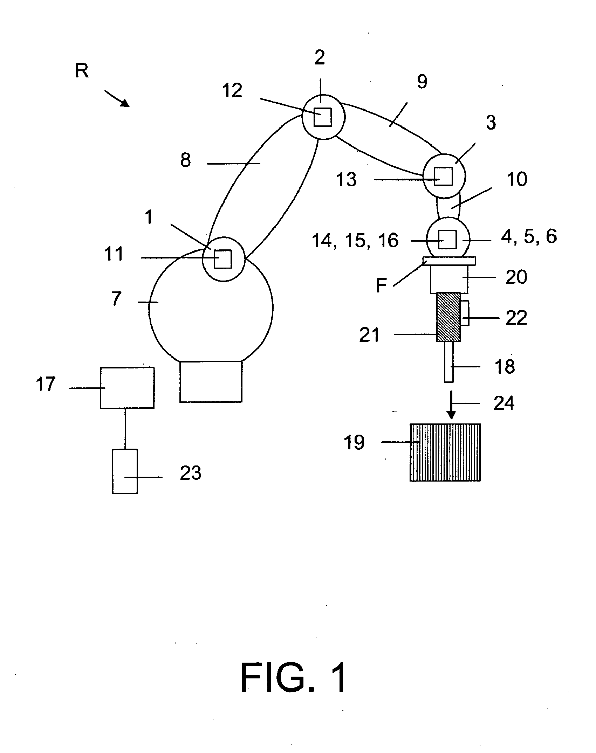

Die Figur 1 zeigt einen Roboter R mit mehreren Achsen 1-6, mehreren Hebeln 7-10 und einem Flansch F, an dem ein Werkzeug 18 befestigt ist. Jede der Achsen 1-6 wird im Falle des vorliegenden Ausführungsbeispiels mit einem elektrischen Motor 11-16 bewegt, wobei die Motoren 11-16 in nicht dargestellter Weise mit einem Steuerrechner 17 elektrisch verbunden sind, sodass der Steuerrechner 17 bzw. ein auf dem Steuerrechner 17 laufendes Rechnerprogramm die Motoren 11-16 derart ansteuern kann, sodass die Position und Orientierung des Flansches F und somit des am Roboter R befestigten Werkzeugs 18 im Wesentlichen frei im Raum ausgerichtet werden kann.

Im Falle des vorliegenden Ausführungsbeispiels weist der Roboter R einen Handgriff 21 auf, mit dem der Flansch F und somit der Roboter R manuell geführt werden kann. Zwischen dem Flansch F und dem Handgriff 21 ist am Roboter R noch ein Kraft-Momenten Sensor 20 angeordnet, der Kräfte und Drehmomente in sechs Freiheitsgrade erfasst, die durch Kontakt des Werkzeugs 18 mit der Umgebung auf den Flansch F wirken oder von einer Bedienperson über den Handgriff 21 des Roboters R aufgebracht werden. Diese Kräfte und Momente führen zu einer tanslatorischen und rotatorischen Bewegung des Flansches F bzw. des sogenannten Tool Center Points (TCP).

Im Falle des vorliegenden Ausführungsbeispiels ist der Roboter R dafür vorgesehen, ein Werkstück mit dem Werkzeug 18 zu bearbeiten. Berührt der Industrieroboter R mit dem Werkzeug 18 das Werkstück, so misst z.B. der Sensor 20 die aufgrund dieser Berührung auf den Roboter R wirkende Kraft.

Damit der Roboter R mittels des Werkzeugs 18 das Werkstück 19 in gewünschter Weise bearbeiten kann, muss der Roboter R zunächst derart programmiert werden, dass der Steuerrechner 17 die Motoren 11-16 derart ansteuert, dass der Flansch F in gewünschter Weise bewegt wird.

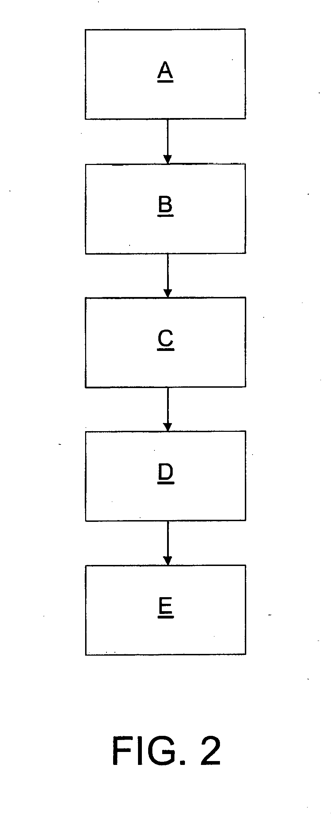

Die Programmierung der Steuerrechners 17 erfolgt im Falle des vorliegenden Ausführungsbeispiels wie nachstehend beschrieben und ist mit einem in der Figur 2 gezeigten Flussdiagramm veranschaulicht:

Zunächst wird der Roboter R derart bewegt, dass sich das Werkzeug 18 in Richtung eines Pfeils 24 in Richtung der Oberfläche eines bereits bearbeiteten Werkstücks 19 bewegt, bis das Werkzeug 18 die Oberfläche des Werkstücks 19 berührt. Gleichzeitig misst der Sensor 20 die auf den Flansch F wirkende Kraft in Richtung des Pfeils 24, Schritt A des Flussdiagramms. Diese Bewegung erfolgt z.B. automatisch, indem der Steuerrechner 17 die Antriebe 11-16 in geeigneter Weise ansteuert. Es ist aber auch möglich, diese Bewegung manuell durchzuführen, indem beispielsweise der Flansch F mit einem mit dem Steuerrechner 17 verbundenen Programmierhandgerät oder einem mit dem Steuerrechner 17 verbundenen Joystick 23 bewegt wird. Aufgrund der Betätigung des Programmierhandgerätes oder des Joysticks 23 steuert der Steuerrechner 17 in geeigneter Weise die Motoren 11-16 an, sodass der Flansch F die gewünschte Bewegung durchführt.

Der Roboter R bewegt den Flansch F bzw. das Werkzeug 18 solange in Richtung des bearbeiteten Werkstücks 19, bis der Sensor 20 eine vorgegebene Maximalkraft misst, d.h. bis das Werkzeug 18 derart stark auf das Werkstück 19 drückt, dass auf den Flansch F die vorgegebene Maximalkraft in Richtung des Pfeils 24 wirkt. Wird die Maximalkraft erreicht, dann stoppt der Roboter R automatisch seine Bewegung bzw. lässt sich manuell nicht mehr weiter in Richtung des Pfeils 24 bewegen, Schritt B des Flussdiagramms.

Anschließend wird der Roboter R mittels des Handgriffs 21 des Roboters R derart manuell geführt, dass sich das Werkzeug 18 bzw. der TCP des Roboters R auf einer Raumkurve bewegt, auf der sich das Werkzeug 18 bzw. der TCP nach der Programmierung bewegen soll.

Im Falle des vorliegenden Ausführungsbeispiels verläuft diese Raumkurve auf der Oberfläche des bearbeiteten Werkstücks 19. Des Weiteren misst während des manuellen Bewegens des Roboters R ständig der Sensor 20 die auf den Roboter R wirkende Kraft bzw. die mittels des Handgriffs 21 aufgebrachte Kraft, Schritt C des Flussdiagramms.

Die Steuervorrichtung 17 ist ferner derart ausgeführt, dass sie eine weitere manuelle Bewegung des Flansches F in Richtung des Pfeils 24 nicht erlaubt, wenn der Sensor 20 eine Kraft in Richtung des Pfeils 24 größer als die vorgegebene Maximalkraft misst. Alternativ kann der Steuerrechner 17 die Motoren 11-16 derart ansteuern, dass die durch die manuelle Führung des Roboters R bedingte Bewegung des Roboters R in Richtung des Pfeils 24 stets derart korrigiert wird, dass stets auf den Roboter R die Maximalkraft in Richtung des Pfeils 24 wirkt, Schritt D des Flussdiagramms.

Um einzelne Ist-Lage-Werte während des manuellen Führens des Roboters R zu speichern, weist im Falle des vorliegenden Ausführungsbeispiels der Handgriff 21 eine Eingabetaste 22 auf, die in nicht dargestellter Weise mit dem Steuerrechner 17 verbunden ist, um bei Betätigung die aktuelle Ist-Lage des Roboters R, d.h. dessen TCP bzw. dessen Flansch F zu speichern, Schritt E des Flussdiagramms. Aufgrund der gespeicherten Ist-Lage-Werte kann der Steuerrechner 17 das obenstehend genannte Rechenprogramm in allgemein bekannter Weise erstellen, aufgrund dessen später der Steuerrechner 17 die Motoren 11-16 ansteuern kann, damit das Werkzeug 18 die gewünschte Bewegung automatisch durchführt. Alternativ kann es auch vorgesehen sein, dass die Ist-Lage-Werte automatisch in vorbestimmten zeitabständen, z.B. alle 10 ms gespeichert werden.

Im Falle des vorliegenden Ausführungsbeispiels ist es noch vorgesehen, dass der Roboter R nur mit einer vorgegebenen maximalen Geschwindigkeit manuell bewegt werden kann. Wird beim Führen des Roboters diese maximale Geschwindigkeit überschritten, dann steuert der Steuerrechner 17 die Motoren 11-16 derart an, dass die Bewegung des Roboters R gebremst wird oder dass die Motoren 11-16 ein geeignetes Drehmoment aufbauen, sodass sich der Roboter R nicht schneller als mit der maximalen Geschwindigkeit bewegen lässt.

Alternativ kann es auch vorgesehen sein, dass der Roboter R manuell z.B. mittels des Joysticks 23 oder mittels des Programmierhandgerätes bewegt wird.

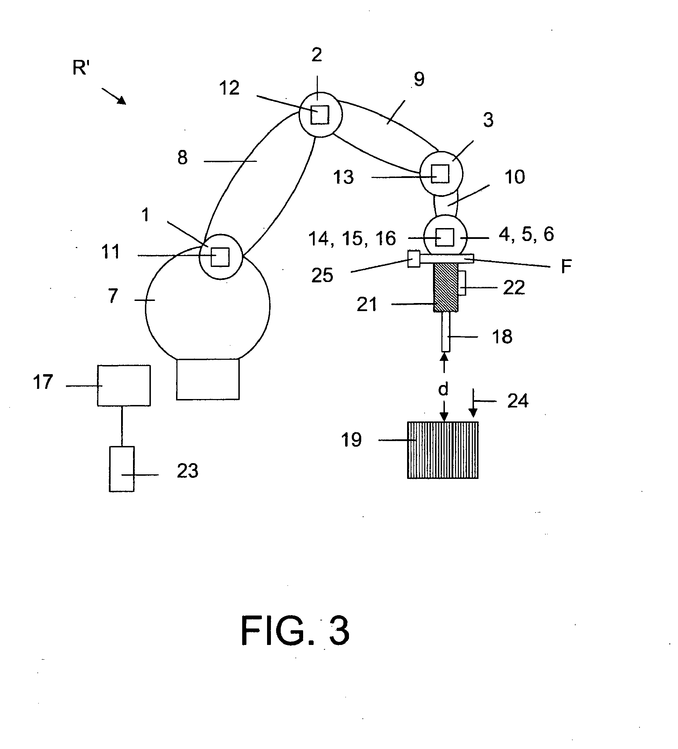

Die Fig. 3 zeigt einen weiteren Roboter R'. Wenn folgend nicht anders beschrieben, dann sind Bestandteile des in der Fig. 3 gezeigten Roboters R', die mit Bestandteilen des in der Fig. 1 gezeigten Roboters R weitgehend bau- und funktionsgleich sind, mit denselben Bezugszeichen versehen.

Der in der Fig. 3 gezeigte Roboter R' unterscheidet sich im Wesentlichen von dem in der Fig. 1 gezeigten Roboter R dadurch, dass der Roboter R' keinen Sensor 20 aufweist. Dafür weist der Roboter R' eine am Flansch F befestigte Abstandsmessvorrichtung 25 auf, die in nicht dargestellter Weise mit dem Steuerrechner 17 verbunden ist.

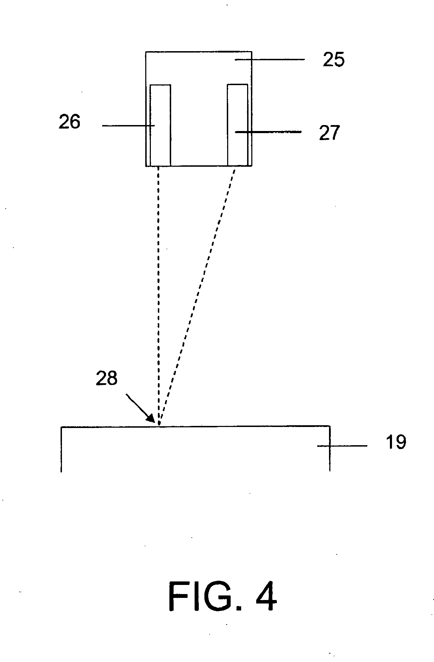

Die im Falle des vorliegenden Ausführungsbeispiels verwendete Abstandsmessvorrichtung 25 ist in der Fig. 4 näher dargestellt und umfasst eine Laserdiode 26 und einen Fotoaufnehmer 27. Der Fotoaufnehmer 27 umfasst beispielsweise einen CCD-Sensor.

Im Falle des vorliegenden Ausführungsbeispiels ist der Roboter R' ebenfalls dafür vorgesehen, ein Werkstück mit dem Werkzeug 18 zu bearbeiten.

Damit der Roboter R' mittels des Werkzeugs 18 das Werkstück in gewünschter Weise bearbeiten kann, muss der Roboter R' zunächst derart programmiert werden, dass der Steuerrechner 17 die Motoren 11-16 derart ansteuert, dass der Flansch F in gewünschter Weise bewegt wird.

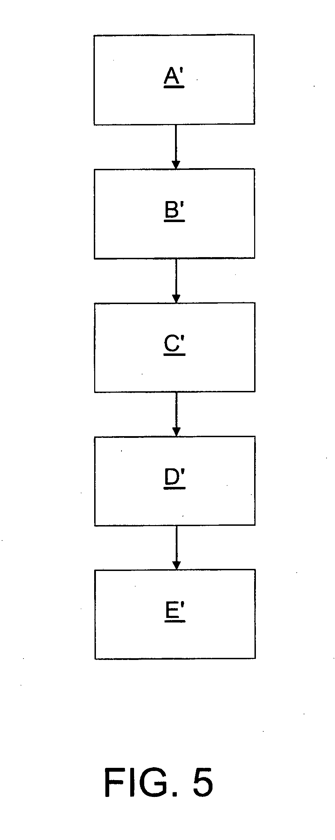

Die Programmierung der Steuerrechners 17 des Roboters R' erfolgt im Falle des vorliegenden Ausführungsbeispiels wie nachstehend beschrieben und ist mit einem in der Figur 5 gezeigten Flussdiagramm veranschaulicht:

zunächst wird der Roboter R' derart bewegt, dass sich das Werkzeug 18 in Richtung des Pfeils 24 in Richtung der Oberfläche des bereits bearbeiteten Werkstücks 19 bewegt. Gleichzeitig ermittelt die am Flansch F befestigte Abstandsmessvorrichtung 25 den Abstand zwischen dem Flansch F und der Oberfläche des bearbeiteten Werkstücks 19 bzw. den Abstand d zwischen dem vom Roboter R' abgewandten Ende des Werkzeugs 18 und der Oberfläche des bearbeiteten Werkstücks 19. Die Messung dieses Abstands d wird im Falle des vorliegenden Ausführungsbeispiels erreicht, indem die Laserdiode 26 einen Laserpunkt 28 auf der Oberfläche des Werkstücks 19 markiert. Die Laserdiode 26 ist dabei im vorliegenden Ausführungsbeispiel in Richtung des Pfeils 24 ausgerichtet. Der Fotoaufnehmer 27 nimmt den Laserpunkt 28 auf und wertet z.B. den Winkel, unter dem der Laserpunkt 28 zur Auswertevorrichtung 25 erscheint, aus. Über diesen Winkel wird der Abstand zwischen der Abstandsvorrichtung 25 und der Oberfläche des Werkstücks 19 bzw. der Abstand d gemessen.

Der Abstand d wird dem Steuerrechner 17 übermittelt. Dieser vergleicht den gemessenen Abstand d mit einem vorab festgelegten Mindestabstand, der im Falle des vorliegenden Ausführungsbeispiels 10mm ist, Schritt A' des Flussdiagramms. Diese Bewegung erfolgt z.B. automatisch, indem der Steuerrechner 17 die Antriebe 11-16 in geeigneter Weise ansteuert. Es ist aber auch möglich, diese Bewegung manuell durchzuführen, indem beispielsweise der Flansch F mit einem mit dem Steuerrechner 17 verbundenen Programmierhandgerät oder dem mit dem Steuerrechner 17 verbundenen Joystick 23 bewegt wird. Aufgrund der Betätigung des Programmierhandgerätes oder des Joysticks 23 steuert der Steuerrechner 17 in geeigneter Weise die Motoren 11-16 an, sodass der Flansch F die gewünschte Bewegung durchführt.

Der Roboter R' bewegt den Flansch F bzw. das Werkzeug 18 solange in Richtung des Werkstücks 19, bis die Abstandsmessvorrichtung 25 den vorgegebenen Mindestabstand misst, d.h. bis der Abstand d zwischen dem Werkzeug 18 und der Oberfläche des Werkstücks 19 gleich dem Mindestabstand ist. Wird der Mindestabstand erreicht, dann stoppt der Roboter R' automatisch seine Bewegung bzw. lässt sich manuell nicht mehr weiter in Richtung des Pfeils 24 bewegen, Schritt B' des Flussdiagramms.

Anschließend wird der Roboter R' mittels des Handgriffs 21 des Roboters R' derart manuell geführt, dass sich das Werkzeug 18 bzw. der TCP des Roboters R' auf einer Raumkurve bewegt, auf der sich das Werkzeug 18 bzw. der TCP nach der Programmierung bewegen soll.

Im Falle des vorliegenden Ausführungsbeispiels verläuft diese Raumkurve auf der Oberfläche des Werkstücks 19. Des Weiteren misst während des manuellen Bewegens des Roboters R' ständig die Abstandsmessvorrichtung 25 den Abstand d, Schritt C' des Flussdiagramms.

Die Steuervorrichtung 17 ist ferner derart ausgeführt, dass sie eine weitere manuelle Bewegung des Flansches F in Richtung des Pfeils 24 nicht erlaubt, wenn die Abstandsmessvorrichtung 25 einen Abstand d kleiner als den Mindestabstand misst. Alternativ kann der Steuerrechner 17 die Motoren 11-16 derart ansteuern, dass die durch die manuelle Führung des Roboters R' bedingte Bewegung des Roboters R' in Richtung des Pfeils 24 stets derart korrigiert wird, dass stets der Abstand d gleich dem Mindestabstand ist, d.h. dass das vom Roboter R' abgewandte Ende des Werkzeugs 18 den vorgegebene Mindestabstand zur Oberfläche des Werkstücks 19 einhält, Schritt D' des Flussdiagramms.

Um einzelne Ist-Lage-Werte während des manuellen Führens des Roboters R' zu speichern, weist im Falle des vorliegenden Ausführungsbeispiels der Handgriff 21 die Eingabetaste 22 auf, die in nicht dargestellter Weise mit dem Steuerrechner 17 verbunden ist, um bei Betätigung die aktuelle Ist-Lage des Roboters R', d.h. dessen TCP bzw. dessen Flansch F zu speichern, Schritt E' des Flussdiagramms. Aufgrund der gespeicherten Ist-Lage-Werte kann der Steuerrechner 17 das obenstehend genannte Rechenprogramm in allgemein bekannter Weise erstellen, aufgrund dessen später der Steuerrechner 17 die Motoren 11-16 ansteuern kann, damit das Werkzeug 18 die gewünschte Bewegung automatisch durchführt. Alternativ kann es auch vorgesehen sein, dass die Ist-Lage-Werte automatisch in vorbestimmten Zeitabständen, z.B. alle 10 ms gespeichert werden.

## Patentansprüche

1. Verfahren zum Programmieren eines Industrieroboters, aufweisend folgende Verfahrensschritte:
- manuelles Bewegen des Industrieroboters (R) entlang einer Raumkurve, die entlang und/oder in der Nähe einer Oberfläche des Objekts (19) verläuft,
- Messen einer aufgrund einer Berührung mit dem Objekt (19) auf den Industrieroboter (R) wirkenden Kraft und/oder eines aufgrund der Berührung mit dem Objekt (19) auf den Industrieroboter (R) wirkenden Drehmomentes während der manuellen Bewegung des Industrieroboters (R) entlang der Raumkurve,
- automatisches Korrigieren der Bewegung des Industrieroboters (R) während seines manuellen Bewegens entlang der Raumkurve, sodass die aufgrund der Berührung des Industrieroboters (R) mit dem Objekt (19) auf den Industrieroboter (R) wirkende Kraft höchstens gleich einer vorbestimmten Maximalkraft und/oder das aufgrund der Berührung des Industrieroboters (R) mit dem Objekt (19) auf den Industrieroboter (R) wirkende Drehmoment höchstens gleich eines vorbestimmten Maximaldrehmomentes ist, und
- Speichern von Lage-Ist-Werten des Industrieroboters (R) während seines Bewegens entlang der Raumkurve,
**dadurch gekennzeichnet, dass** vor dem manuellen Bewegen des Industrieroboters (R) entlang der Raumkurve der Industrieroboter (R) automatisch in Richtung des Objekts (19) bewegt wird, bis der Industrieroboter (R) das Objekt (19) berührt und auf den Industrieroboter (R) die vorbestimmte Maximalkraft und/oder das vorbestimmte Maximaldrehmoment wirkt.

2. Verfahren nach Anspruch 1, aufweisend automatisches Korrigieren der Bewegung des Industrieroboters (R) während seines manuellen Bewegens entlang der Raumkurve, sodass die aufgrund der Berührung des Industrieroboters (R) mit dem Objekt (19) auf den Industrieroboter (R) wirkende Kraft stets gleich der vorbestimmten Maximalkraft und/oder das aufgrund der Berührung des Industrieroboters (R) mit dem Objekt (19) auf den Industrieroboter (R) wirkende Drehmoment stets gleich dem vorbestimmten Maximaldrehmoment ist.

3. Verfahren nach Anspruch 1 oder 2, bei dem die Maximalkraft und/oder das Maximaldrehmoment in eine vorbestimmte Richtung (24) zeigen.

4. Verfahren nach Anspruch 3, bei dem die vorbestimmte Richtung (24) in einem Werkzeugkoordinatensystem, in einem Weltkoordinatensystem oder einem Roboterkoordinatensystem des Industrieroboters (R) beschrieben ist, und/oder bei dem die vorbestimmte Richtung (24) von der Position und/oder Pose des Industrieroboters (R) abhängt.

5. Verfahren nach einem der Ansprüche 3 oder 4, aufweisendmanuelles Bewegen des Industrieroboters (R) in Richtungen ungleich der vorgegebenen Richtung (24).

6. Verfahren zum Programmieren eines Industrieroboters, aufweisend folgende Verfahrensschritte:
- manuelles Bewegen eines Industrieroboters (R') entlang einer Raumkurve, die entlang einer Oberfläche eines Objekts (19) verläuft,
- Ermitteln eines Abstand (d) zwischen der Oberfläche des Objekts (19) und dem Industrieroboter (R') während der manuellen Bewegung des Industrieroboters (R') entlang der Raumkurve,
- automatisches Korrigieren der Bewegung des Industrieroboters (R') während seines manuellen Bewegens entlang der Raumkurve, sodass der Abstand (d) zwischen dem Industrieroboter (R') und der Oberfläche des Objekts (19) stets gleich einem Mindestabstand ist, und
- Speichern von Lage-Ist-Werten des Industrieroboters (R) während seines Bewegens entlang der Raumkurve,
**dadurch gekennzeichnet, dass** vor dem manuellen Bewegen des Industrieroboters (R') entlang der Raumkurve der Industrieroboter (R') automatisch in Richtung des Objekts (19) bewegt wird, bis der Abstand (d) zwischen dem Industrieroboter (R') und der Oberfläche des Objekts (19) gleich dem Mindestabstand ist.

7. Verfahren nach Anspruch 6, bei dem der Abstand (d) zwischen dem Industrieroboter (R') und der Oberfläche des Objekts (19) ein Abstand zwischen dem Flansch (F) des Industrieroboters (R'), einem mit dem Industrieroboter (R') bewegten Werkzeug (18) und/oder einer am Industrieroboter (R') angeordneten Abstandsmessvorrichtung (25) und der Oberfläche des Objekts (19) ist.

8. Verfahren nach einem der Ansprüche 1 bis 7, aufweisend manuelles Führen des Industrieroboters (R, R') als das manuelle Bewegen und/oder aufweisend manuelles Bewegen des Industrieroboters (R, R') mittels eines manuell bedienbaren Eingabegerätes (23), und/oder aufweisend automatisches Beschränken der Geschwindigkeit des manuellen Bewegens auf eine vorbestimmte Maximalgeschwindigkeit.

9. Industrieroboter, aufweisend eine Mehrzahl von Antrieben (11-16), eine Mehrzahl von von den Antrieben (11-16) bewegbaren Achsen (1-6), eine Vorrichtung (20) zum Ermitteln einer Kraft und/oder eines Drehmoments, die während eines manuellen Bewegens des Industrieroboters (R) entlang einer Raumkurve, die entlang und/oder in der Nähe einer Oberfläche eines Objekts (19) verläuft, eine aufgrund einer Berührung mit dem Objekt (19) auf den Industrieroboter (R) wirkende Kraft und/oder eines aufgrund der Berührung mit dem Objekt (19) auf den Industrieroboter (R) wirkende Drehmoment ermittelt, und eine zum Steuern der Antriebe (11-16) vorgesehene Steuervorrichtung (17), die automatisch die Antriebe (11-16) derart ansteuert, um die Bewegung des Industrieroboters (R) während seines manuellen Bewegens entlang der Raumkurve derart zu korrigieren, sodass die aufgrund der Berührung des Industrieroboters (R) mit dem Objekt (19) auf den Industrieroboter (R) wirkende Kraft höchstens gleich einer vorbestimmten Maximalkraft und/öder das aufgrund der Berührung des Industrieroboters (R) mit dem Objekt (19) auf den Industrieroboter (R) wirkende Drehmoment höchstens gleich eines vorbestimmten Maximaldrehmomentes ist, **dadurch gekennzeichnet, dass** die Steuervorrichtung (17) automatisch die Antriebe (11-16) ansteuert, sodass sich der Industrieroboter (R) in Richtung des Objekts (19) bewegt, bis der Industrieroboter (R) das Objekt (19) berührt und auf den Industrieroboter (R) die vorbestimmte Maximalkraft und/oder das vorbestimmte Maximaldrehmoment wirkt.

10. Industrieroboter nach Anspruch 9, aufweisend ein Eingabemittel (22), aufgrund dessen Betätigung die Steuervorrichtung (17) Lage-Ist-Werte des Industrieroboters (R) während seines Bewegens entlang der Raumkurve speichert, und/oder dessen Steuervorrichtung (17) die Antriebe (11-16) während des manuellen Bewegens des Industrieroboters (R) derart ansteuert, dass die aufgrund der Berührung des Industrieroboters (R) mit dem Objekt (19) wirkende Kraft stets gleich der vorbestimmten Maximalkraft und/oder dass das aufgrund der Berührung des Industrieroboters (R) mit dem Objekt (19) auf den Industrieroboter (R) wirkende Drehmoment stets gleich dem vorbestimmten Maximaldrehmoment ist.

11. Industrieroboter nach einem der Ansprüche 9 oder 10, bei dem die Maximalkraft und/oder das Maximaldrehmoment in eine vorbestimmte Richtung (24) zeigen.

12. Industrieroboter nach Anspruch 12, bei dem die vorbestimmte Richtung (24) in einem Werkzeugkoordinatensystem, in einem Weltkoordinatensystem oder einem Roboterkoordinatensystem des Industrieroboters (R) beschrieben ist, und/oder bei dem die vorbestimmte Richtung von der Position und/oder Pose des Industrieroboters (R) abhängt.

13. Industrieroboter, aufweisend eine Mehrzahl von Antrieben (11-16), eine Mehrzahl von von den Antrieben (11-16) bewegbaren Achsen (1-6), eine Abstandsmessvorrichtung (25) zum Messen eines Abstands (d) zwischen dem Industrieroboter (R') und der Oberfläche eines Objekts (19), und eine zum Steuern der Antriebe (11-16) vorgesehene Steuervorrichtung (17), die automatisch die Antriebe (11-16) derart ansteuert, um eine Bewegung des Industrieroboters (R') während eines manuellen Bewegens des Industrieroboters (R') entlang einer Raumkurve, die entlang der Oberfläche des Objekts (19) verläuft, derart zu korrigieren, sodass der Abstand (d) zwischen dem Industrieroboter (R') und der Oberfläche des Objekts (19) stets gleich einem vorgegebenen Mindestabstand ist, **dadurch gekennzeichnet, dass** die Steuervorrichtung (17) automatisch die Antriebe (11-16) ansteuert, sodass sich der Industrieroboter (R') in Richtung des Objekts (19) bewegt, bis der Abstand (d) zwischen dem Industrieroboter (R') und der Oberfläche des Objekts (19) gleich dem Mindestabstand ist.

14. Industrieroboter nach Anspruch 13, bei dem der Abstand (d) zwischen dem Industrieroboter (R') und der Oberfläche des Objekts (19) ein Abstand zwischen dem Flansch (F) des Industrieroboters (R'), einem mit dem Industrieroboter (R') bewegten Werkzeug (18) und/oder einer am Industrieroboter (R') angeordneten Abstandsmessvorrichtung (25) und der Oberfläche des Objekts (19) ist.

15. Industrieroboter nach einem der Ansprüche 9 bis 14, aufweisend ein manuell bedienbares Eingabegerät (23) zum manuellen Bewegen des Industrieroboters und/oder einen Handgriff (21) zum manuellen Führen des Industrieroboters (R, R'), und/oder dessen Steuervorrichtungen (17) die Antriebe derart steuert, dass der Industrieroboter (R, R') nur mit einer Maximalgeschwindigkeit manuell bewegbar ist.

## Claims

1. Method for programming an industrial robot, comprising the following steps:
- manually moving the industrial robot (R) along a space curve, which runs along and/or in proximity to a surface of an object (19),
- measuring a force acting on the industrial robot (R) as a result of contact with the object (19) and/or a torque acting on the industrial robot (R) as a result of contact with the object (19) during the manual movement of the industrial robot (R) along the space curve,
- automatically correcting the movement of the industrial robot (R) during its manual movement along the space curve, so that the force acting on the industrial root (R) as a result of the contact of the industrial robot (R) with the object (19) is at most equal to a predetermined maximum force and/or the torque acting on the industrial robot (R) as a result of the contact of the industrial robot (R) with the object (19) is at most equal to a predetermined maximum torque, and
- saving the actual position values of the industrial robot (R) during its movement along the space curve,
**characterised in that** prior to the manual movement of the industrial robot (R) along the space curve the industrial robot (19) is moved automatically in the direction of the object (19) until the industrial robot (R) touches the object (19) and the predetermined maximum force and/or the predetermined maximum torque acts on the industrial robot (R).

2. Method according to claim 1, comprising automatically correcting the movement of the industrial robot (R) during its manual movement along the space curve, so that the force acting on the industrial robot (R) as a result of the contact of the industrial robot (R) with the object (19) is always equal to the predetermined maximum force and/or the torque acting on the industrial robot (R) as a result of the contact of the industrial robot (R) with the object (19) is always equal to the predetermined maximum torque.

3. Method according to claim 1 or 2, wherein the maximum force and/or the maximum torque point in a predetermined direction (24).

4. Method according to claim 3, wherein the predetermined direction (24) is described in a tool coordinate system, in a world coordinate system or a robot coordinate system of the industrial robot (R) and/or wherein the predetermined direction (24) is dependent on the position and/or pose of the industrial robot (R).

5. Method according to one of claims 3 or 4, comprising manually moving the industrial robot (R) in a direction that is not the same as the predetermined direction (24).

6. Method for programing an industrial robot comprising the following steps:
- manually moving an industrial robot (R') along a space curve, which runs along a surface of an object (19),
- determining a distance (d) between the surface of the object (19) and the industrial robot (R') during the manual movement of the industrial robot (R') along the space curve,
- automatically correcting the movement of the industrial robot (R') during its manual movement along the space curve, so that the distance (d) between the industrial robot (R') and the surface of the object (19) is always the same as a minimum distance and
- saving actual position values of the industrial robot (R) during its movement along the space curve,
**characterised in that** prior to the manual movement of the industrial robot (R') along the space curve the industrial robot (R') is moved automatically in the direction of the object (19) until the distance (d) between the industrial robot (R') and the surface of the object (19) is equal to the minimum distance.

7. Method according to claim 6, wherein the distance (d) between the industrial robot (R') and the surface of the object (19) is a distance between the flange (F) of the industrial robot (R'), a tool (18) moved by the industrial robot (R') and/or a distance measuring device (25) arranged on the industrial robot (R') and the surface of the object (19).

8. Method according to one of claims 1 to 7, comprising manually guiding the industrial robot (R, R') as the manual movement and/or comprising manually moving the industrial robot (R, R') by means of a manually operable input device (23) and/or comprising automatically limiting the speed of the manual movement to a predetermined maximum speed.

9. Industrial robot comprising a plurality of drives (11-16), a plurality of axes (1-6) movable by the drives (11-16), a device (20) for determining a force and/or a torque, which determines during a manual movement of the industrial robot (R) along a space curve which runs along and/or in proximity to a surface of an object (19) a force acting on the industrial robot (R) as a result of contact with the object (19) and/or a torque acting on the industrial robot (R) as a result of contact with the object (19) and a control device (17) provided for controlling the drives (11-16) which automatically controls the drives (11-16) in order to correct the movement of the industrial robot (R) during its manual movement along the space curve so that the force acting on the industrial robot (R) as a result of the contact of the industrial robot (R) with the object (19) is at most equal to a predetermined maximum force and/or the torque acting on the industrial robot (R) a result of the contact of the industrial robot (R) with the object (19) is at most equal to a predetermined maximum torque, **characterised in that** the control device (17) automatically controls the drives (11-16) so that the industrial robot (R) moves in the direction of the object (19) until the industrial robot (R) contacts the object (19) and the predetermined maximum force and/or the predetermined maximum torque acts on the industrial robot (R).

10. Industrial robot according to claim 9, comprising an input means (22), which when activated causes the control device (17) to save the actual position values of the industrial robot (R) during its movement along the space curve, and/or its control (17) controls the drives (11-16) during the manual movement of the industrial robot (R) such that the force acting as a result of the contact of the industrial robot (R) with the object (19) is always equal to the predetermined maximum force and/or such that the torques acting on the industrial robot (R) as a result of the contact of the industrial robot (R) with the object (19) is always equal to the predetermined maximum torque.

11. Industrial robot according to one of claims 9 or 10, wherein the maximum force and/or the maximum torque point in a predetermined direction (24).

12. Industrial robot according to claim 12, wherein the predetermined direction (24) is described in a tool coordinate system, in a world coordinate system or a robot coordinate system of the industrial robot (R), and/or wherein the predetermined direction is dependent on the position and/or pose of the industrial robot (R).

13. Industrial robot comprising a plurality of drives (11-16), a plurality of axes (1-6) moveable by the drives (11-16), a distance measuring device (25) for measuring a distance (d) between the industrial robot (R') and the surface of an object (19) and a control device (17) provided for controlling the drives (11-16), which automatically controls the drives (11-16) in order to correct a movement of the industrial robot (R') during a manual movement of the industrial robot (R') along a space curve which runs along the surface of the object (19), so that the distance (d) between the industrial robot (R') and the surface of the object (19) is always equal to a predetermined minimum distance, **characterised in that** the control device (17) automatically controls the drives (11-16) so that the industrial robot (R') moves in the direction of the object (19) until the distance (d) between the industrial robot (R') and the surface of the object (19) is equal to the minimum distance.

14. Industrial robot according to claim 13, wherein the distance (d) between the industrial robot (R') and the surface of the object (19) is a distance between the flange (F) of the industrial robot (R'), a tool (18) moved by the industrial robot (R') and/or a distance measuring device (25) arranged on the industrial robot (R') and the surface of the object (19).

15. Industrial robot according to one of claims 9 to 14, comprising a manually operable input device (23) for manually moving the industrial robot and/or a handle (21) for manually guiding the industrial robot (R, R') and/or its control devices (17) which control the drives such that the industrial robot (R, R') can be moved manually only at a maximum speed.

## Revendications

1. Procédé de programmation d'un robot industriel, présentant les étapes de procédé suivantes :
- déplacement manuel du robot industriel (R) le long d'une courbe dans l'espace qui s'étend le long et/ou à proximité d'une surface de l'objet (19),
- mesure d'une force agissant sur le robot industriel (R) en raison d'un contact avec l'objet (19) et/ou d'un couple de rotation agissant sur le robot industriel (R) en raison du contact avec l'objet (19) pendant le déplacement manuel du robot industriel (R) le long de la courbe dans l'espace,
- correction automatique du mouvement du robot industriel (R) pendant son déplacement manuel le long de la courbe dans l'espace, de telle sorte que la force agissant sur le robot industriel (R) en raison du contact du robot industriel (R) avec l'objet (19) est au plus égale à une force maximale prédéterminée et/ou que le couple de rotation agissant sur le robot industriel (R) en raison du contact avec l'objet (19) est au plus égal à un couple de rotation maximum prédéterminé, et
- mémorisation de valeurs effectives de position du robot industriel (R) pendant son déplacement le long de la courbe dans l'espace,
**caractérisé en ce que** avant le déplacement manuel du robot industriel (R) le long de la courbe dans l'espace, le robot industriel (R) est déplacé automatiquement en direction de l'objet (19) jusqu'à ce que le robot industriel (R) vienne en contact avec l'objet (19) et la force maximale prédéterminée et/ou le couple de rotation prédéterminé agisse sur le robot industriel (R).

2. Procédé selon la revendication 1, présentant une correction automatique du mouvement du robot industriel (R) pendant son déplacement manuel le long d'une courbe dans l'espace, de telle sorte que la force agissant sur le robot industriel (R) en raison du contact du robot industriel (R) avec l'objet (19) est toujours égale à une force maximale prédéterminée et/ou le couple de rotation agissant sur le robot industriel (R) en raison du contact avec l'objet (19) est toujours égal à un couple de rotation maximum prédéterminé.

3. Procédé selon la revendication 1 ou 2, dans lequel la force maximale et/ou le couple de rotation maximum sont orientés dans une direction (24) prédéterminée.

4. Procédé selon la revendication 3, dans lequel la direction prédéterminée est décrite dans un système de coordonnées d'outil, dans un système de coordonnées universelles ou dans un système de coordonnées de robot du robot industriel (R), et/ou dans lequel la direction prédéterminée (24) dépend de la position et/ou de la pose du robot industriel (R).

5. Procédé selon l'une des revendications 3 ou 4, présentant le déplacement manuel du robot industriel (R) dans des directions différentes de la direction (24) prédéterminée.

6. Procédé pour la programmation d'un robot industriel, présentant les étapes de procédé suivantes :
- déplacement manuel d'un robot industriel (R') le long d'une courbe dans l'espace qui s'étend le long d'une surface d'un objet (19),
- détermination d'une distance (d) entre la surface de l'objet (19) et le robot industriel (R') pendant le déplacement manuel du robot industriel (R') le long de la courbe dans l'espace,
- correction automatique du mouvement du robot industriel (R') pendant son déplacement manuel le long de la courbe dans l'espace, de telle sorte que la distance (d) entre le robot industriel (R') et la surface de l'objet (19) est toujours égale à une distance minimum, et
- mémorisation de valeurs effectives de position du robot industriel (R') pendant son déplacement le long de la courbe dans l'espace,
**caractérisé en ce que** avant le déplacement du robot industriel (R) le long de la courbe dans l'espace, le robot industriel (R') est automatiquement déplacé en direction de l'objet (19) jusqu'à ce que la distance (d) entre le robot industriel (R') et la surface de l'objet (19) soit égale à la distance minimum.

7. Procédé selon la revendication 6, dans lequel al distance (d) entre le robot industriel (R') et la surface de l'objet (19) est une distance entre la bride (F) du robot industriel (R'), un outil (18) mû avec le robot industriel (R') et/ou entre un dispositif de mesure de distance (25) agencé sur le robot industriel (R') et la surface de l'objet (19).

8. Procédé selon l'une des revendications 1 à 7, présentant le guidage manuel du robot industriel (R, R') en tant que déplacement manuel et/ou présentant le déplacement manuel du robot industriel (R, R') au moyen d'un organe d'entrée (23) à actionnement manuel et/ou présentant la limitation automatique de la vitesse du déplacement manuel à une vitesse maximale prédéterminée.

9. Robot industriel, présentant une multitude d'entraînements (11-16), une multitude d'axes (1-6) qui peuvent être mus par les entraînements (11-16), un dispositif (20) pour déterminer une force et/ou un couple de rotation, qui détermine, pendant un déplacement manuel du robot industriel (R) le long de la courbe dans l'espace qui s'étend le long de et/ou à proximité d'une surface d'un objet (19), une force agissant sur le robot industriel (R) en raison d'un contact avec l'objet (19) et/ou un couple de rotation agissant sur le robot industriel (R) en raison du contact avec l'objet (19), et un dispositif de commande (17) prévu pour commander les entraînements (11-16), qui pilote automatiquement les entraînements (11-16) de manière à corriger le mouvement du robot industriel (R) pendant son déplacement manuel le long de la courbe dans l'espace de telle sorte que la force agissant sur le robot industriel (R) en raison du contact du robot industriel (R) avec l'objet (19) est au plus égale à une force maximale prédéterminée et/ou que le couple de rotation agissant sur le robot industriel (R) en raison du contact du robot industriel (R) avec l'objet (19) est au plus égal à un couple de rotation maximum prédéterminé, **caractérisé en ce que** le dispositif de commande (17) pilote automatiquement les entraînements (11-16), de telle sorte que le robot industriel (R) se déplace en direction de l'objet (19) jusqu'à ce que le robot industriel (R) vienne en contact avec l'objet (19) et que la force maximale prédéterminée et/ou le couple de rotation maximum prédéterminé agisse sur le robot industriel (R).

10. Robot industriel selon la revendication 9, présentant un moyen d'entrée (22) sur la base de l'actionnement duquel le dispositif de commande (17) mémorise des valeurs effectives de position pendant son déplacement le long de la courbe dans l'espace, et/ou dont le dispositif de commande (17) pilote les entraînements (11-16) pendant le déplacement manuel du robot industriel (R) de telle sorte que la force agissant en raison du contact du robot industriel (R) avec l'objet (19) est toujours égale à la force maximale prédéterminée et/ou que le couple de rotation agissant sur le robot industriel (R) en raison du contact du robot industriel (R) avec l'objet (19) est toujours égal au couple de rotation maximum prédéterminé.

11. Robot industriel selon l'une des revendications 9 ou 10, dans lequel la force maximale et/ou le couple de rotation maximum sont orientés dans une direction (24) prédéterminée.

12. Robot industriel selon la revendication 12, dans lequel la direction (24) prédéterminée est décrite dans un système de coordonnées d'outil, dans un système de coordonnées universelles ou dans un système de coordonnées de robot du robot industriel (R) et/ou dans lequel la direction prédéterminée dépend de la position et/ou de la pose du robot industriel (R).

13. Robot industriel présentant une multitude d'entraînements (11-16), une multitude d'axes (1-6) qui peuvent être mus par les entraînements (11-16), un dispositif de mesure de distance (25) pour mesurer une distance (d) entre le robot industriel (R') et la surface d'un objet (19), et un dispositif de commande (17) prévu pour commander les entraînements (11-16), qui pilote automatiquement les entraînements (11-16) de manière à corriger un mouvement du robot industriel (R') pendant un déplacement manuel du robot industriel (R') de telle sorte que la distance (d) entre le robot industriel (R') et la surface de l'objet (19) est toujours égale à une distance minimum prédéterminée, **caractérisé en ce que** le dispositif de commande (17) pilote automatiquement les entraînements (11-16) de telle sorte que le robot industriel (R') se déplace en direction de l'objet (19) jusqu'à ce que la distance (d) entre le robot industriel (R') et la surface de l'objet (19) soit égale à la distance minimum.

14. Robot industriel selon la revendication 13, dans lequel la distance (d) entre le robot industriel (R') et la surface de l'objet (19) est une distance entre la bride (F) du robot industriel (R'), un outil (18) déplacé avec le robot industriel (R') et/ou entre un dispositif de mesure de distance (25) agencé sur le robot industriel (R') et la surface de l'objet (19).

15. Robot industriel selon l'une des revendications 9 à 14, présentant un organe d'entrée (23) à actionnement manuel pour déplacer manuellement le robot industriel et/ou une manette (21) pour le guidage manuel du robot industriel (R, R') et/ou dont le dispositif de commande (27) commande les entraînements de telle sorte que le robot industriel (R, R') peut être déplacé manuellement seulement avec une vitesse maximale.
